(19) Europäisches Patentamt
European Patent Office
Office européen des brevets

(11) **EP 2 797 167 B1**

(12) **FASCICULE DE BREVET EUROPEEN**

(45) Date de publication et mention de la délivrance du brevet:
**14.07.2021 Bulletin 2021/28**

(51) Int Cl.:
***H01Q 3/26*** *(2006.01)*

(21) Numéro de dépôt: **14165478.0**

(22) Date de dépôt: **22.04.2014**

(54) **Circuit d'alimentation distribuee pour reseau de formation de faisceaux d'antenne**

Verteilte Zuführvorrichtung für Netz zur Bildung von Antennenstrahlen

Distributed supply circuit for a network for forming an antenna beam

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2013 FR 1300972**

(43) Date de publication de la demande:
**29.10.2014 Bulletin 2014/44**

(73) Titulaires:
• **Thales**
**92400 Courbevoie (FR)**
• **Das Photonics, S.L.**
**46022 Valencia (ES)**

(72) Inventeurs:
• **Caille, Gérard**
**31170 TOURNEFEUILLE (FR)**
• **Sotom, Michel**
**31037 TOULOUSE (FR)**
• **Piqueras Ruiperez, Miguel Angel**
**46022 VALENCIA (ES)**
• **Mengual Chulia, Teresa**
**46022 VALENCIA (ES)**

(74) Mandataire: **Marks & Clerk France**
**Immeuble "Visium"**
**22, avenue Aristide Briand**
**94117 Arcueil Cedex (FR)**

(56) Documents cités:
CA-A1- 2 100 839     FR-A1- 2 929 764
US-B1- 6 337 660     US-B1- 6 426 721

• **None**

**Description**

L'invention concerne le domaine des réseaux de formation de faisceau d'antenne pour réseaux antennaires. Elle concerne plus précisément un circuit d'alimentation distribuée pour un réseau de formation de faisceau.

Le domaine de l'invention est celui des réseaux antennaires, notamment pour antennes satellites. Les réseaux d'antenne satellite ont la capacité de générer plusieurs faisceaux d'antenne dans différentes directions d'observation. De telles antennes multi-faisceaux sont utilisées à bord d'un satellite pour des applications de télécommunications dans différentes bandes de fréquences, par exemple la bande Ka pour les applications multimédia, les bandes Ku ou C pour les liaisons de communication point à point ou encore les bandes L ou S pour les communications mobiles par satellite. Les réseaux d'antenne ont l'avantage de permettre une reconfiguration des différents faisceaux, notamment de leur nombre et de leur direction de pointage.

Pour cela, une antenne multi-faisceaux nécessite d'être couplée à un réseau de formation de faisceaux chargé du routage du signal d'alimentation approprié vers les différents éléments antennaires du réseau d'antenne en vue de configurer les faisceaux d'antennes générés par chacun desdits éléments.

Le domaine de l'invention est donc également celui des réseaux de formation de faisceau d'antenne. Un sous-domaine concerne les réseaux de formation de faisceau matriciels connus sous le nom de matrices de Butler. Une matrice de Butler est un dispositif passif hyperfréquences composé de coupleurs hybrides et de déphaseurs. Un tel dispositif est connu du domaine des réseaux antennaires et est notamment décrit dans la publication « Jesse Butler, Ralph Lowe, Beam-Forming Matrix Simplifies Design of Electronically Scanned Antennas, Electronic Design, volume 9, pp. 170-173, April 12, 1961 ». Il permet d'obtenir, pour un signal hyperfréquences produit sur une de ses entrées, une distribution équi-amplitude de ce signal sur l'ensemble des sorties, avec un incrément de phase régulier entre chaque sorties consécutives.

Lorsqu'on connecte les ports de sortie d'une matrice de Butler aux éléments rayonnants d'un réseau antennaire, le signal hyperfréquence injecté sur chaque entrée de la matrice est rayonné par le réseau antennaire dans une direction et selon un faisceau d'antenne directif prédéterminés. Tous les faisceaux d'antenne ainsi générés via les différents éléments rayonnants sont régulièrement espacés et orthogonaux. La propriété d'orthogonalité des faisceaux est importante pour obtenir une bonne isolation des différentes voies entre elles.

Un avantage de la matrice de Butler est qu'elle nécessite un nombre minimum de coupleurs, de l'ordre de $N.(\log_2 N)/2$ au lieu de $2N(N-1)$, pour un réseau de formation de faisceau classique, avec N le nombre de sorties de la matrice égale au nombre de faisceaux d'antennes à générer.

Les matrices de Butler sont généralement employées pour des signaux hyperfréquences ou plus généralement des signaux électriques dans la gamme des fréquences micro-ondes. La technologie classiquement utilisée pour réaliser une matrice de Butler est la technologie guide d'onde qui présente l'inconvénient d'un encombrement important. En effet, pour des applications embarquées, un problème à résoudre concerne la miniaturisation de tels dispositifs car la compacité d'un dispositif antennaire est un avantage important surtout lorsque le nombre d'éléments antennaires, et donc indirectement le nombre de sorties de la matrice de Butler, augmente.

Une solution connue permettant de résoudre le problème d'encombrement des matrices de Butler réalisées en technologie guide d'onde consiste à convertir le signal électrique à une fréquence micro-ondes en un signal optique de sorte à pouvoir réaliser la matrice de Butler constituée d'un arrangement de coupleurs et de lignes à retard implémentés par un circuit intégré photonique ou PIC (photonic integrated circuit) en anglais. La longueur d'onde d'un signal optique étant par nature sensiblement plus réduite que celle d'un signal électrique à une fréquence micro-ondes, on améliore ainsi la compacité du dispositif.

Des solutions d'implémentation de matrices de Butler exploitant la technologie des circuits intégrés photoniques sont décrites notamment dans la publication scientifique « J. T. Gallo, and R. DeSalvo, Experimental Démonstration of Optical Guided-Wave Butler Matrices, IEEE Transactions on Microwave Theory and Techniques, Vol. 45, N°8, August 1997 » ou dans la publication internationale de la demande WO 2003/079101.

Par ailleurs, l'état de l'art relatif à l'invention comporte également les enseignements décrits dans les documents suivants :    FR2929764,    US6426721, US6337660 et CA2100839.

Le document WO 2003/079101 décrit un dispositif du type Matrice de Butler basée sur un système optique hétérodyne qui reçoit en entrée un signal optique. Le dispositif décrit dans ce document est basé sur des déphaseurs de valeurs fixes qui sont conçus dans le domaine optique.

Les architectures proposées sont basées sur des systèmes optiques hétérodynes qui requièrent un contrôle très précis de la phase optique et l'implémentation de boucles de contrôle de phase complexes.

Un problème de ce type d'architecture concerne la précision des déphaseurs nécessaires pour réaliser une matrice de Butler. En effet, comme indiqué ci-dessus une matrice de Butler est traditionnellement composée de coupleurs hybrides mais également de déphaseurs. L'agencement de ces coupleurs et déphaseurs permet de réaliser la fonction de transfert matricielle désirée, qui doit être unitaire ou au moins orthogonale, pour notamment configurer les phases des signaux de sortie de la matrice. Pour une matrice à 8 entrées et 8 sorties, les déphasages requis sont des multiples de PI/8 ou 22,5°. Un déphaseur est en pratique réalisé par une ligne à retard. Or, dans le domaine optique, la longueur d'onde (directement liée au déphasage à imprimer) est très réduite, typiquement de l'ordre de quelques nanomètres. On voit donc qu'il existe un problème concernant la précision de la réalisation des lignes à retard pour mettre en œuvre les déphasages souhaités avec l'exactitude requise. La précision des déphasages est importante car elle est directement liée à l'isolation des voies de sortie de la matrice entre elles. Si les déphasages ne sont pas implémentés de façon suffisamment précise, cela a un impact sur la fonction de transfert de la matrice qui n'est alors plus unitaire.

Un problème existe donc pour améliorer la précision des déphaseurs d'une matrice de Butler implémentée en technologie PIC.

La présente invention apporte une réponse au problème précité en proposant un circuit d'alimentation distribuée à faible encombrement, car réalisable en technologie PIC, adapté pour recevoir un signal électrique modulé sur porteuse optique.

L'invention présente l'avantage principal de permettre une configuration des longueurs des lignes à retard à l'échelle des fréquences micro-ondes du signal électrique, ce qui facilite grandement l'implémentation des déphasages précis que doit comporter un tel circuit.

Le circuit d'alimentation distribuée selon l'invention, permet, lorsqu'il est employé dans un réseau de formation de faisceau d'antennes, la génération d'un faisceau d'antennes multiple dans des directions de pointage dont l'espacement angulaire est ajustable.

L'invention a pour objet un circuit d'alimentation distribuée pour réseau de formation de faisceaux d'antenne comprenant une pluralité N d'entrées et une pluralité N de sorties, ledit circuit étant adapté pour recevoir, sur au moins une entrée, un signal électrique à une fréquence micro-onde donnée, le signal étant modulé sur au moins une porteuse optique, ledit circuit comprenant au moins un ensemble d'au moins deux diviseurs optiques à une seule entrée et deux sorties, au moins une ligne à retard de longueur configurée pour être égale à une fraction entière de la longueur d'onde dudit signal à sa fréquence micro-ondes et deux moyens pour combiner deux signaux optiques ayant deux entrées et ayant une seule sortie connectée à une sortie distincte dudit circuit, ledit ensemble étant agencé et les lignes à retard étant configurées de sorte que la fonction de transfert théorique dudit circuit est une matrice orthogonale.

Selon un aspect particulier du circuit d'alimentation distribuée selon l'invention, une ligne à retard est connectée, à une première extrémité, à une première sortie d'un diviseur optique.

Selon un aspect particulier du circuit d'alimentation distribuée selon l'invention, un diviseur optique est connecté, par son entrée, à une entrée dudit circuit.

Selon un aspect particulier du circuit d'alimentation distribuée selon l'invention, un moyen pour combiner deux signaux optiques est connecté, par sa sortie, à une sortie dudit circuit.

Selon un aspect particulier du circuit d'alimentation distribuée selon l'invention, ledit ensemble comprend deux lignes à retard qui sont de longueur sensiblement égale au quart de la longueur d'onde dudit signal à sa fréquence micro-ondes.

Selon un aspect particulier du circuit d'alimentation distribuée selon l'invention, ledit ensemble comprend une ligne à retard de longueur sensiblement égale à la moitié de la longueur d'onde dudit signal à sa fréquence micro-ondes

Selon un aspect particulier du circuit d'alimentation distribuée selon l'invention, le nombre N d'entrées et de sorties est une puissance de deux.

Selon un aspect particulier du circuit d'alimentation distribuée selon l'invention, une seconde sortie d'un diviseur optique est connectée à une première entrée d'un moyen pour combiner deux signaux optiques et une ligne à retard est connectée, à une seconde extrémité, à une seconde entrée d'un moyen pour combiner deux signaux optiques.

Selon un aspect particulier du circuit d'alimentation distribuée selon l'invention, ledit circuit comprend un nombre d'ensembles égal au logarithme binaire du nombre N d'entrées et de sorties que multiplie la moitié dudit nombre N.

Selon un aspect particulier du circuit d'alimentation distribuée selon l'invention, une sortie d'un moyen pour combiner deux signaux optiques d'un premier ensemble est connectée à une entrée d'un diviseur optique d'un second ensemble, directement ou par l'intermédiaire d'une ligne à retard supplémentaire de longueur nulle ou sensiblement égale à la moitié de la longueur d'une ligne à retard, de longueur non nulle, d'un desdits ensemble, ladite longueur étant configurée de sorte que la fonction de transfert théorique dudit circuit est une matrice orthogonale.

Selon un aspect particulier du circuit d'alimentation distribuée selon l'invention, l'ensemble formé par un moyen pour combiner deux signaux optiques et un diviseur optique, connectés en série, est remplacé par un coupleur optique, ladite ligne à retard supplémentaire étant connectée, à une première extrémité, à une sortie d'un coupleur optique.

Selon un aspect particulier du circuit d'alimentation distribuée selon l'invention, un moyen pour combiner deux signaux optiques est un combineur optique à 3 dB.

Selon un aspect particulier du circuit d'alimentation distribuée selon l'invention, un moyen pour combiner deux signaux optiques est un multiplexeur d'au moins deux longueurs d'onde optiques et la fonction de transfert théorique dudit circuit est une matrice unitaire.

Selon un aspect particulier du circuit d'alimentation distribuée selon l'invention, un coupleur optique est remplacé par un premier entrelaceur de longueurs d'ondes optiques et un moyen, relié à une sortie dudit circuit, pour combiner deux signaux optiques est un second entrelaceur de longueurs d'ondes optiques, un entrelaceur de longueurs d'ondes optiques étant apte à recevoir sur une entrée une pluralité de longueurs d'ondes optiques et à les délivrer alternativement sur l'une ou l'autre de ses sorties selon une période d'entrelacement donnée, la période d'entrelacement d'un second entrelaceur étant égale au double de la période d'entrelacement d'un premier entrelaceur.

Selon un aspect particulier du circuit d'alimentation distribuée selon l'invention, ledit circuit est un circuit intégré optique ou un circuit réalisé au moyen de fibres optiques.

L'invention a également pour objet un réseau de formation de faisceau d'antenne comprenant des moyens pour moduler au moins un signal électrique à une fréquence micro-ondes sur une porteuse optique, un circuit d'alimentation distribuée selon l'invention pour recevoir ledit au moins un signal électrique sur porteuse optique et des moyens pour convertir ledit signal électrique sur porteuse optique en signal électrique destiné à alimenter au moins un élément antennaire d'un réseau d'antenne.

Selon un aspect particulier du réseau de formation de faisceau d'antenne selon l'invention, lesdits moyens pour moduler un signal électrique sur porteuse optique sont adaptés pour moduler les signaux électriques destinés à être injectés sur les entrées dudit circuit d'alimentation distribuée sur des porteuses optiques de longueurs d'onde différentes.

L'invention a également pour objet une utilisation d'un circuit d'alimentation distribuée selon l'invention ou d'un réseau de formation de faisceau d'antenne selon l'invention consistant à injecter, sur les entrées dudit circuit d'alimentation distribuée, une pluralité de signaux électriques sur porteuse optique selon un arrangement croissant des valeurs des longueurs d'onde optiques desdits signaux ou selon un arrangement alternant les valeurs paires et impaires des longueurs d'onde optiques desdits signaux.

L'invention a également pour objet un récepteur comprenant une pluralité d'éléments antennaires délivrant un signal électrique, des moyens pour moduler ledit signal électrique à une fréquence micro-ondes sur une porteuse optique, un circuit d'alimentation distribuée selon l'invention pour recevoir ledit signal électrique sur porteuse optique et des moyens pour convertir ledit signal électrique sur porteuse optique en signal électrique.

L'invention a également pour objet un dispositif d'amplification multi-ports comprenant des moyens pour moduler au moins un signal électrique à une fréquence micro-ondes sur une porteuse optique, un premier circuit d'alimentation distribuée selon l'invention pour recevoir ledit signal électrique sur porteuse optique, des moyens pour convertir ledit signal électrique sur porteuse optique en signal électrique et un second circuit d'alimentation distribuée agencé pour recevoir le signal électrique de sortie des moyens de conversion.

D'autres caractéristiques et avantages de la présente invention apparaîtront mieux à la lecture de la description qui suit en relation aux dessins annexés qui représentent :

- La figure 1, un schéma d'un coupleur 90° à deux entrées et deux sorties selon l'invention,
- La figure 2, un schéma d'un circuit d'alimentation distribuée à quatre entrées et quatre sorties selon l'invention,
- La figure 3, un schéma d'une variante de réalisation du circuit d'alimentation 4x4 de la figure 2,
- La figure 4, un schéma d'un circuit d'alimentation distribuée à huit entrées et huit sorties selon l'invention,

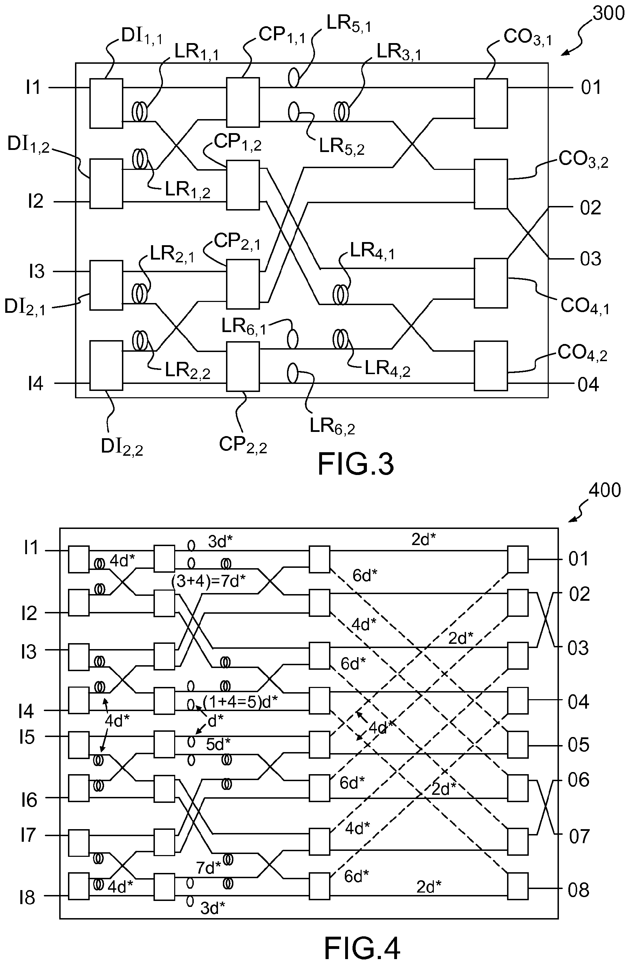

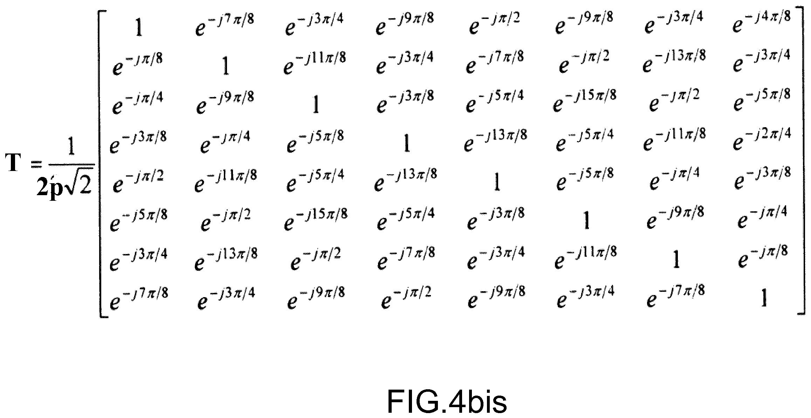

- La figure 4bis, la matrice orthogonale correspondant à la fonction de transfert théorique du circuit de la figure 4,

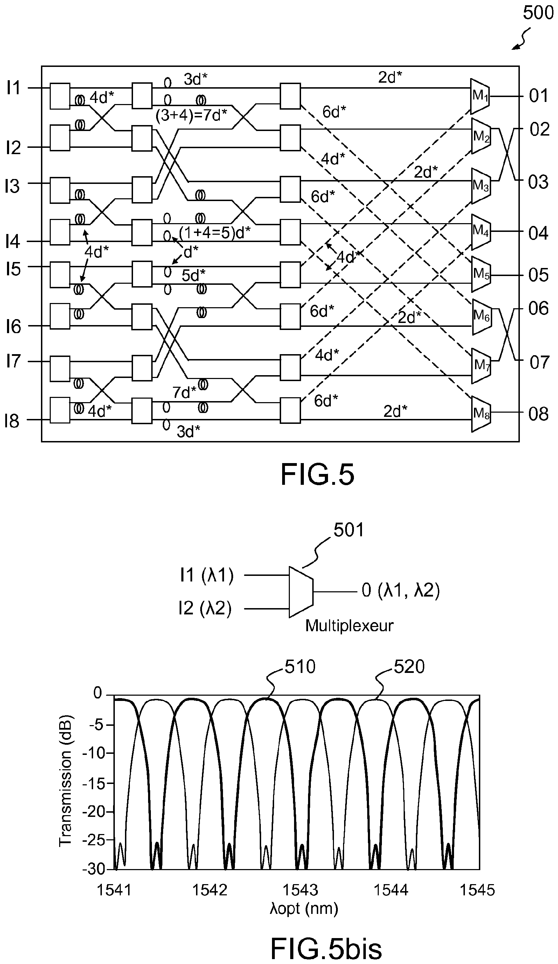

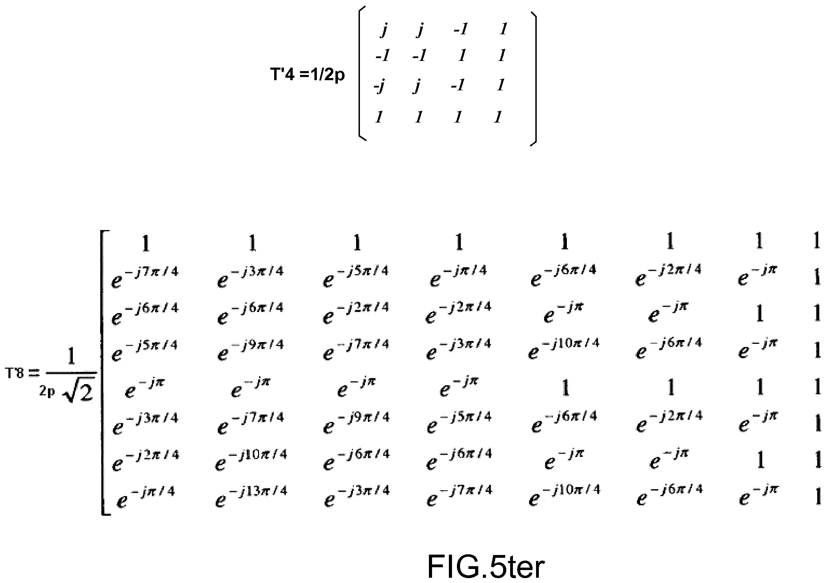

- La figure 5, un schéma d'une variante de réalisation du circuit d'alimentation 8x8 de la figure 4,
- La figure 5bis, un schéma illustrant le fonctionnement d'un multiplexeur entrelaceur de longueurs d'ondes employé dans le circuit de la figure 5,
- La figure 5ter, deux autres exemples de fonctions de transfert matricielles pour la réalisation d'une autre variante du circuit d'alimentation selon l'invention, respectivement pour 4 entrées/sorties et 8 entrées/sorties, à partir d'un coupleur 180°,

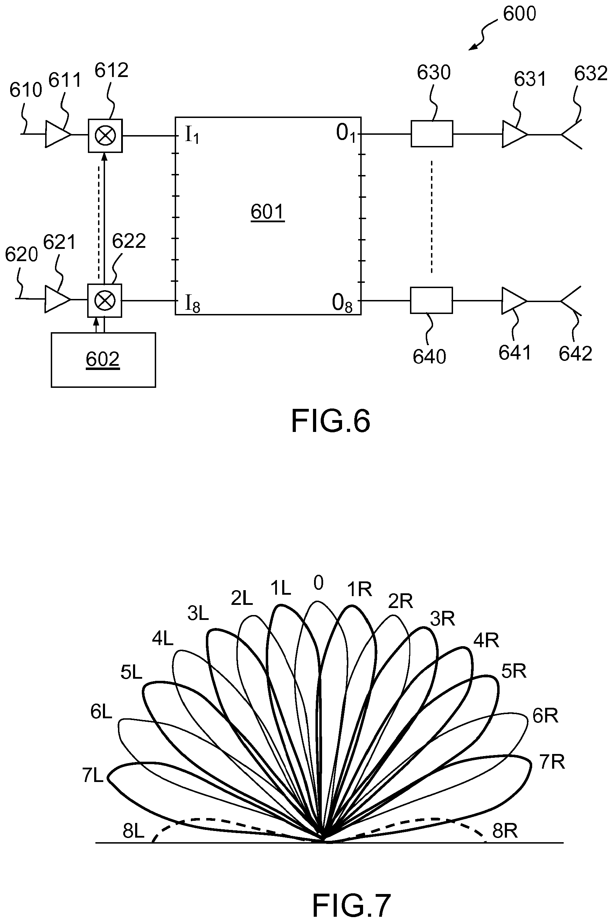

- La figure 6, un schéma d'un réseau de formation de faisceaux selon l'invention,
- La figure 7, un schéma illustrant les formations de faisceaux d'antenne obtenus avec un réseau de formation de faisceaux selon l'une ou l'autre des variantes de réalisation du coupleur à deux entrées et deux sorties selon l'invention,

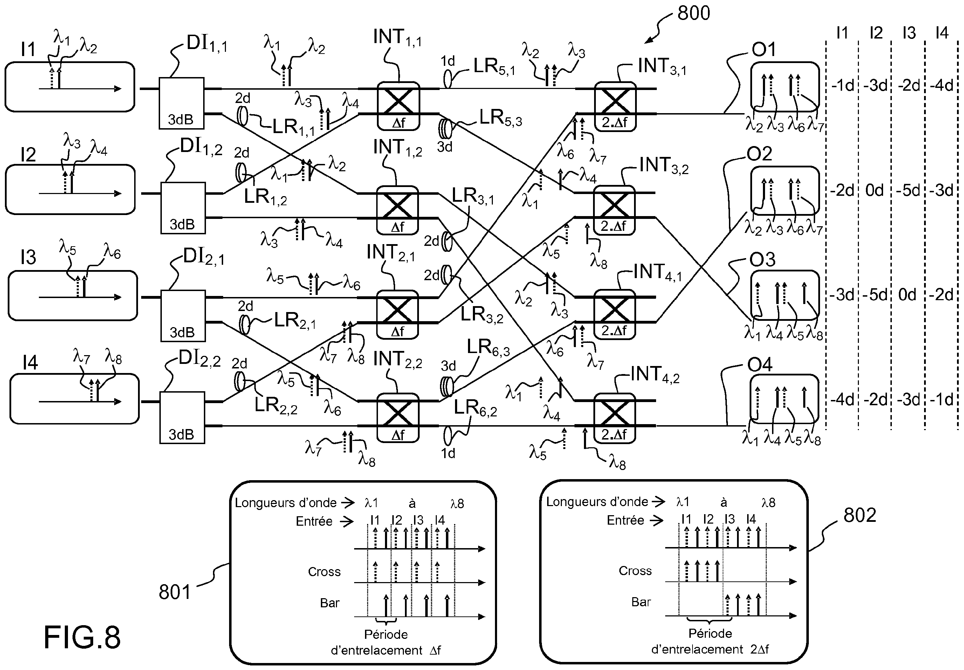

- La figure 8, un schéma d'une variante supplémentaire de réalisation d'un circuit d'alimentation selon l'invention à quatre entrées et quatre sorties,

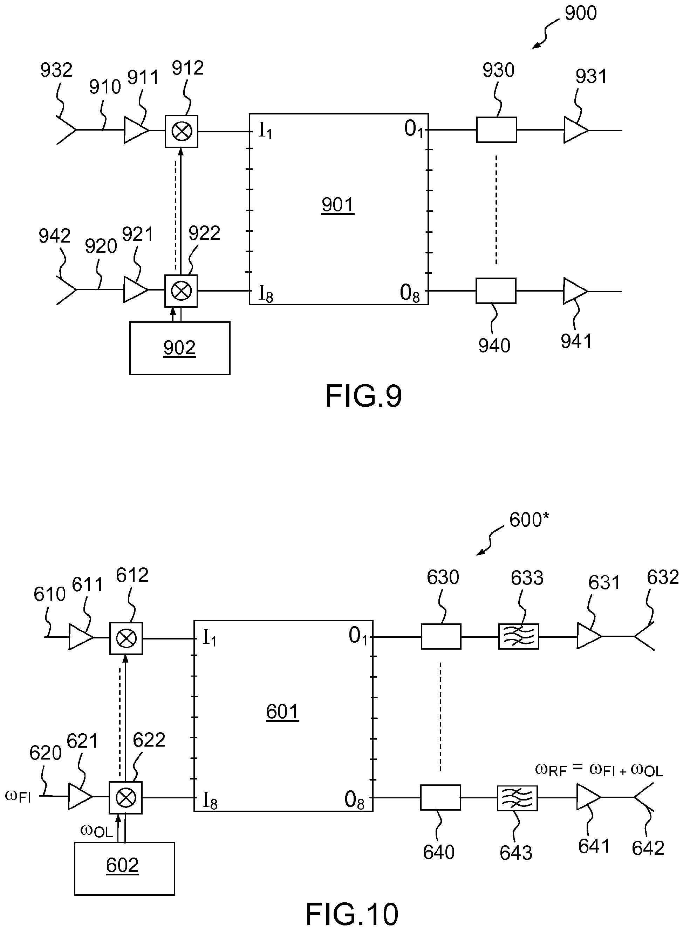

- La figure 9, un schéma d'un dispositif antennaire fonctionnant en réception, ledit dispositif comportant un circuit d'alimentation distribuée selon l'invention,
- La figure 10, une variante du réseau de formation de faisceaux selon l'invention décrit à la figure 6,

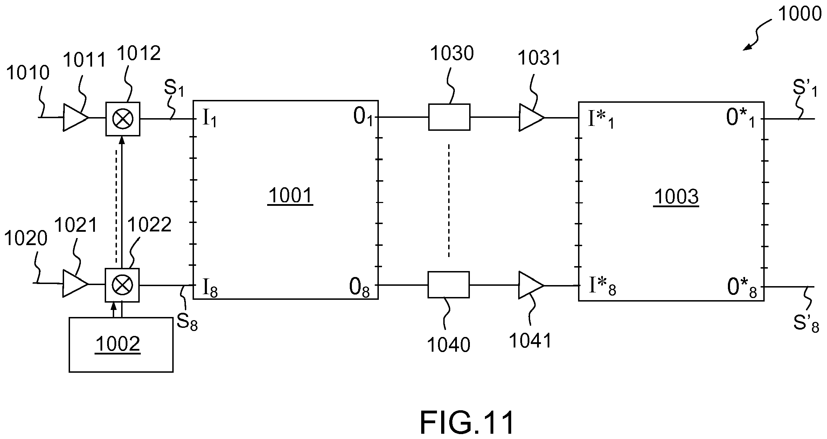

- La figure 11, un schéma d'un dispositif d'amplification multi-ports comprenant deux circuits d'alimentation distribuée selon l'invention,

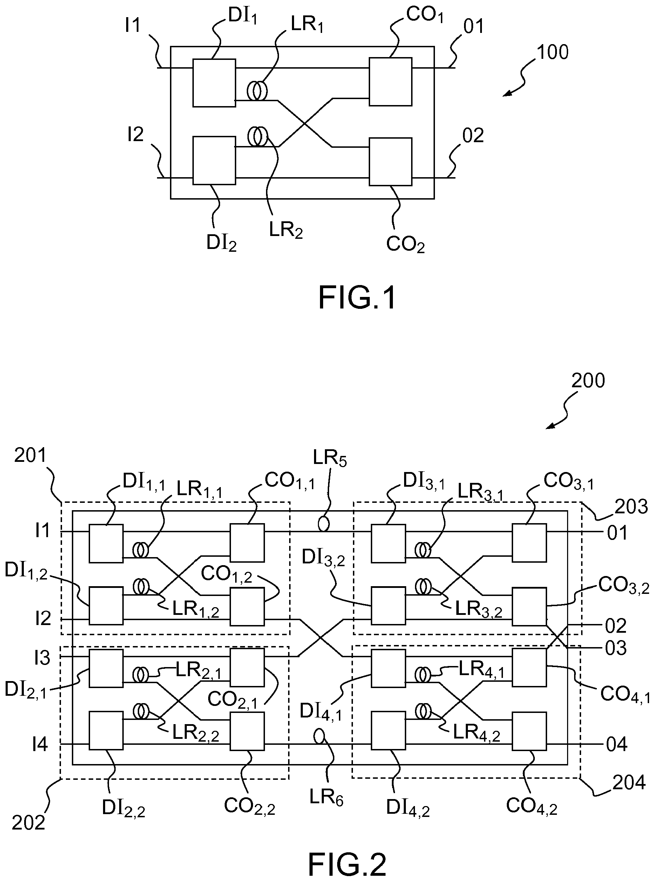

La figure 1 représente, sur un schéma, un exemple d'un premier mode de réalisation d'un circuit d'alimentation distribuée selon l'invention. L'exemple concerne un circuit à deux entrées et deux sorties, mais peut être étendu, comme cela est explicité par la suite, à un circuit à N entrées et N sorties, avec N un nombre entier égal à une puissance de deux. Lorsque le nombre N d'entrées et de sorties est égal à deux comme sur l'exemple de la figure 1, le circuit d'alimentation distribuée est équivalent à un coupleur, par exemple un coupleur hybride.

Le circuit d'alimentation 100 de la figure 1 est composé d'un ensemble de deux diviseurs optiques DI1,DI2, deux combineurs optiques CO1,CO2 et deux lignes à retard LR1,LR2. Une entrée d'un diviseur optique DI1,DI2 est connectée à une entrée I1,I2 du circuit d'alimentation 100. Une sortie d'un combineur optique CO1,CO2 est connectée à une sortie O1,O2 du circuit d'alimentation 100. Une ligne à retard LR1,LR2 est connectée, à une première extrémité, à une sortie d'un diviseur optique DI1,DI2 et à une seconde extrémité, à une entrée d'un combineur optique CO1,CO2. La seconde sortie d'un diviseur optique DI1 est connectée à la seconde entrée du combineur optique C01 dont la première entrée est reliée à l'autre diviseur optique DI2 via la ligne à retard LR2.

Les deux lignes à retard LR1,LR2 ont une longueur égale au quart de la longueur d'onde du signal à la fréquence micro-ondes. Comme le signal injecté sur les entrées I1,I2 du circuit 100 selon l'invention est un signal électrique sur porteuse optique, la longueur des lignes à retard LR1,LR2 est configurée pour obtenir un déphasage de PI/2 ou 90° dans le domaine fréquentiel du signal électrique, c'est-à-dire dans le domaine des fréquences micro-ondes. De cette façon, il est plus aisé d'obtenir la précision requise sur le déphasage car la longueur d'onde dans le domaine des fréquences micro-ondes est de l'ordre de la dizaine de millimètres alors qu'elle n'est que de l'ordre du micromètre dans le domaine des fréquences optiques.

Les diviseurs optiques DI1,D12 et les combineurs optiques CO1,CO2 sont des dispositifs de couplage optique qui sont aptes à diviser un signal en puissance ou à combiner deux signaux pour obtenir un signal de puissance double. Les signaux de sortie d'un diviseur optique DI1,DI2 sont en phase.

L'agencement des diviseurs, combineurs et lignes à retard est réalisé de sorte que la fonction de transfert théorique du circuit d'alimentation 100 selon l'invention est égale à $T = \frac{1}{p\sqrt{2}}\begin{pmatrix} 1 & -j \\ -j & 1 \end{pmatrix}$, où j est l'unité imaginaire, c'est-à-dire le nombre complexe dont le carré est égal à -1 et p est un facteur de perte en amplitude, $p^2$ étant le facteur de perte en puissance correspondant.

Le facteur de perte en amplitude p est égal à un dans le cas où les combineurs optiques CO1, CO2, sont réalisés par des dispositifs qui n'induisent pas de perte en amplitude sur le signal de sortie. C'est le cas notamment des multiplexeurs de sous-bandes fréquentielles différentes, comme cela sera explicité par la suite.

Le facteur de perte p est inférieur à 1 si les combineurs optiques CO1, CO2 sont réalisés par des dispositifs qui induisent des pertes en amplitude sur le signal de sortie. C'est le cas notamment des dispositifs de sommation optique ou sommateurs optiques. En effet un sommateur, ou dispositif de sommation, ne peut être sans perte que pour une relation de phase précise entre les signaux d'entrée, par exemple une différence de phase nulle pour un sommateur dit 'en-phase'. Comme les signaux provenant de chaque entrée sont différents, en pratique décorrélés, cette condition de phase ne peut être respectée, et il est bien connu de l'Homme du métier qu'un sommateur induit une perte en amplitude de 3dB entre l'une quelconque des entrées et sa sortie. La valeur du facteur de perte est égale dans ce cas à $1/\sqrt{2}$ et provient du fait que $20\log(1/\sqrt{2}) = -3$dB.

Quelle que soit la valeur du facteur de perte p, la fonction de transfert théorique du circuit d'alimentation 100 selon l'invention est une matrice orthogonale, c'est-à-dire qu'elle vérifie la relation VO1.VO2* VO2.VO1*=0, où V01 et V02 sont les vecteurs colonnes (dans l'exemple de la figure 1, ces vecteurs ne comportent que deux termes) composés des valeurs des amplitudes complexes des deux signaux de sortie du circuit d'alimentation 100. L'opérateur * est l'opérateur transconjugué. V* est une matrice ligne composée des nombres complexes conjugués des valeurs du vecteur V.

Dans le cas où le facteur de perte p est égal à 1, autrement dit lorsque le circuit d'alimentation selon l'invention est sans perte, alors sa fonction de transfert théorique est en outre une matrice unitaire, c'est-à-dire qu'elle vérifie la relation suivante T.T* = T*.T=Id, avec Id la matrice identité et T* la matrice transconjuguée encore appelée conjuguée hermitienne de la matrice T. Dans le cas où le facteur de perte est différent de 1, la relation précédente devient T.T* = T*.T=$(1/p^2)$.Id, la matrice T est alors uniquement orthogonale.

Le fait que la fonction de transfert du circuit d'alimentation 100 est une matrice orthogonale est une propriété essentielle car elle permet d'obtenir une isolation parfaite des voies de sortie du circuit les unes par rapport aux autres et un espacement régulier des faisceaux générés par l'antenne alimentée par ce dispositif. Si la matrice n'est pas unitaire, les pertes se traduisent par le fait qu'une part importante de la puissance du signal d'entrée est réfléchie.

Les signaux de sortie du circuit d'alimentation 100 sont ainsi donnés, en notation complexe, par les relations suivantes, en fonction des signaux d'entrée :

$$O1 = 1/(p\sqrt{2})\ (I1\text{-}j.I2)$$

$$O2 = 1/(p\sqrt{2})\ (\text{-}j.I1\text{+}I2)$$

Autrement dit, lorsqu'un signal est produit sur la première entrée I1, le signal résultant sur la première sortie O1 est en phase avec le signal d'entrée et le signal résultant sur la seconde sortie O2 est déphasé de -PI/2. Lorsqu'un signal est produit sur la seconde entrée I2, le signal résultant sur la seconde sortie O2 est en phase avec le signal d'entrée et le signal résultant sur la première sortie O1 est déphasé de -PI/2.

Le circuit d'alimentation 100 selon l'invention permet ainsi d'obtenir le déphasage requis de plus ou moins PI/2 entre les deux sorties du circuit. Il n'est pas possible d'obtenir un tel déphasage, calculé à la fréquence micro-ondes, avec un simple coupleur optique car celui-ci ne permet d'imprimer que des déphasages réalisés à l'échelle des fréquences optiques, qui sont beaucoup plus élevées que les fréquences micro-ondes.

Le circuit d'alimentation 100 selon l'invention est avantageusement réalisé par un circuit intégré optique ou circuit PIC (photonic integrated circuit) et est de façon générale mis en œuvre par le biais d'une technologie d'optique intégrée. Un avantage de cette technologie est la miniaturisation du dispositif réalisé.

Alternativement, en particulier si les fréquences micro-ondes sont basses, le circuit d'alimentation 100 selon l'invention peut également être réalisé en fibres optiques.

Le circuit 100 décrit à la figure 1 peut être généralisé à un circuit d'alimentation distribuée comprenant N entrées et N sorties, avec N un nombre entier égal à une puissance de deux.

La figure 2 décrit un circuit d'alimentation 200 à quatre entrées I1,I2,I3,I4 et quatre sorties O1,O2,O3,O4.

Le circuit 200 de la figure 2 comporte quatre ensembles 201,202,203,204 de deux diviseurs, deux combiners et deux lignes à retard agencés de la même façon que pour le circuit 100 de la figure 1 à deux entrées et deux sorties.

Les quatre ensembles 201,202,203,204 sont connectés entre eux de la façon suivante. La sortie d'un combineur $CO_{1,1}$ du premier ensemble 201 est connectée à l'entrée d'un diviseur $DI_{3,1}$ du troisième ensemble 203 par le biais d'une ligne à retard LR5 de longueur égale au huitième de la longueur d'onde du signal à la fréquence micro-ondes. La sortie d'un combineur $CO_{2,2}$ du deuxième ensemble 202 est connectée à l'entrée d'un diviseur $DI_{4,2}$ du quatrième ensemble 204 par le biais d'une ligne à retard LR6 de longueur égale au huitième de la longueur d'onde du signal à la fréquence micro-ondes. La sortie d'un combineur $CO_{1,2}$ du premier ensemble 201 est connectée directement à l'entrée d'un diviseur $DI_{4,1}$ du quatrième ensemble. La sortie d'un combineur $CO_{2,1}$ du deuxième ensemble 202 est connectée directement à l'entrée d'un diviseur $DI_{3,2}$ du troisième ensemble.

Les quatre ensembles 201,202,203,204 sont agencés de sorte que la fonction de transfert du circuit d'alimentation 200 selon l'invention est égale à la matrice orthogonale

$$T = \frac{1}{2p}\begin{pmatrix} 1 & e^{-\frac{j\pi}{4}} & e^{-\frac{j\pi}{2}} & e^{-\frac{j3\pi}{4}} \\ e^{-\frac{j\pi}{4}} & 1 & e^{-\frac{j5\pi}{4}} & e^{-\frac{j\pi}{2}} \\ e^{-\frac{j\pi}{2}} & e^{-\frac{j5\pi}{4}} & 1 & e^{-\frac{j\pi}{4}} \\ e^{-\frac{j3\pi}{4}} & e^{-\frac{j\pi}{2}} & e^{-\frac{j3\pi}{4}} & 1 \end{pmatrix}.,$$

où p est le facteur de perte en amplitude précédemment introduit.

En fonction de l'entrée 11,12,13,14 activée, c'est-à-dire de l'entrée sur laquelle est injecté un signal, les signaux obtenus sur les quatre sorties 01,02,03,04 ont une puissance égale et sont régulièrement déphasés entre eux d'un déphasage constant multiple de PI/4.

Le circuit représenté à la figure 2 peut être généralisé à tout circuit d'alimentation distribuée à N entrées et N sorties, N étant une puissance de 2, en augmentant le nombre d'ensembles 201,202,203,204 à un nombre égal à (N/2)log2(N) et en les interconnectant entre eux au moyen de lignes à retard de longueur égale à un multiple de la longueur d'onde du signal à une fréquence micro-ondes divisé par 2N.

La figure 3 représente un schéma d'une variante de réalisation du circuit d'alimentation 200 de la figure 2.

Afin d'améliorer encore la compacité du circuit selon l'invention en diminuant le nombre de composants nécessaires, on remplace l'ensemble formé par un combineur et un diviseur montés en série, par un coupleur à deux entrées et deux sorties.

Par exemple, l'ensemble formé du combineur $CO_{1,2}$ et du diviseur $DI_{4,1}$ connectés en série est remplacé par un unique coupleur $CP_{1,2}$. De même l'ensemble formé du combineur $CO_{2,1}$ et du diviseur $DI_{3,2}$ connectés en série est remplacé par un unique coupleur $CP_{2,1}$. L'ensemble formé du combineur $CO_{1,1}$ et du diviseur $DI_{3,1}$ connectés en série par le biais d'une ligne à retard $LR_5$ est remplacé par un unique coupleur $CP_{1,1}$ dont les deux sorties sont connectées à deux lignes à retard $LR_{5,1}$ et $LR_{5,2}$ de même longueur égale au huitième de la longueur d'onde du signal à la fréquence micro-ondes. L'ensemble formé du combineur $CO_{2,2}$ et du diviseur $DI_{4,2}$ connectés en série par le biais d'une ligne à retard $LR_6$ est remplacé par un unique coupleur $CP_{2,2}$ dont les deux sorties sont connectées à deux lignes à retard $LR_{6,1}$ et $LR_{6,2}$ de même longueur égale au huitième de la longueur d'onde du signal à la fréquence micro-ondes.

Les coupleurs $CP_{1,1}$, $CP_{1,2}$, $CP_{2,1}$, $CP_{2,2}$ utilisés sont des coupleurs optiques qui n'introduisent aucun déphasage significatif, à l'échelle du domaine des fréquences micro-ondes, entre les deux signaux délivrés par leur deux sorties respectives.

Deux lignes à retard $LR_{5,2}$, $LR_{3,2}$ montées en série peuvent être remplacées par une seule ligne à retard de longueur égale à la somme des longueurs des deux lignes.

Un autre avantage de cette variante de réalisation est que la suppression des combiners $CO_{1,1}$ $CO_{1,2}$ $CO_{2,1}$ $CO_{2,2}$ permet d'éviter des pertes en puissance lorsque les signaux d'entrée des combiners ne sont pas cohérents en phase.

La figure 4 représente un schéma d'un circuit d'alimentation 400 à huit entrées et huit sorties selon l'invention.

Le circuit 400 décrit à la figure 4 est dérivé du circuit 300 décrit à la figure 3 en doublant le nombre d'entrées et de sorties.

Le circuit 400 comprend huit diviseurs optiques, chacun connecté à une entrée I1,..., I8 du circuit 400 et huit combineurs optiques, chacun reliés à une sortie O1,..., O8 du circuit 400. Le circuit 400 comprend en outre deux étages de huit coupleurs optiques à double entrée et double sortie. Les différents composants du circuit 400 sont connectés entre eux, soit directement, soit par le biais de lignes à retard de longueur égale à un multiple de la distance d'=$\lambda_{RF}$/16 où $\lambda_{RF}$ est la longueur d'onde du signal à la fréquence micro-ondes. Sur la figure 4 sont indiqués les valeurs précises des longueurs des différentes lignes à retard en multiple de la longueur d'.

L'ensemble des composants du circuit 400 est agencé de sorte que la fonction de transfert théorique T du circuit est la matrice orthogonale représentée à la figure 4bis, où p est le facteur de perte en amplitude.

Un objectif est que les signaux obtenus en sortie du circuit 400 doivent être déphasés entre eux régulièrement d'un incrément de phase constant égal à un multiple de PI/8. La valeur de l'incrément de phase dépend de l'entrée I1,..., I8 activée.

La figure 4 représente un exemple de circuit d'alimentation distribuée à huit entrées et huit sorties selon l'invention. Les coupleurs à double entrée et double sortie sont utilisés, comme indiqué pour l'exemple de la figure 3, pour diminuer le nombre de composants nécessaires. Sans sortir du cadre de l'invention, ils peuvent être remplacés, comme expliqué pour l'exemple de la figure 2, par un ensemble composé d'un combineur optique et d'un diviseur optique connectés en série.

Les exemples des figures 1,2,3 et 4 sont donnés à titre illustratif, pour la bonne compréhension de l'invention, mais ne doivent pas être interprétés comme limitant l'objet de l'invention à ces seuls exemples. En particulier, l'invention peut être étendue à tout circuit d'alimentation distribuée comprenant un nombre N d'entrées et de sorties, N étant une puissance de deux, et dont la fonction de transfert est une matrice orthogonale ou unitaire lorsque le facteur de perte est égal à 1. Dans une première variante de réalisation, le circuit d'alimentation selon l'invention est composé d'une pluralité d'ensembles, tels que décrits à la figure 1, interconnectés entre eux directement ou par le biais de lignes à retard de longueur égale à un multiple de la distance d'=$\lambda_{RF}$/(2N) où $\lambda_{RF}$ est la longueur d'onde du signal à la fréquence micro-ondes. Dans une deuxième variante de réalisation, l'ensemble composé d'un combineur optique et d'un diviseur optique connectés en série peut être remplacé par un coupleur optique à double entrée et double sortie tel qu'illustré aux figures 3 et 4.

La figure 5 représente une autre variante de réalisation du circuit d'alimentation de la figure 4.

Les combineurs optiques formant le dernier étage de composants du circuit d'alimentation selon l'invention peuvent présenter des pertes dues au fait que les signaux qu'ils reçoivent en entrée ne sont pas cohérents en phase. Autrement dit, un combineur optique ne peut pas effectuer une recombinaison cohérente de deux signaux s'ils ne sont pas cohérents en phase.

Un moyen de résoudre ce problème est de remplacer chaque combineur optique par un multiplexeur de fréquences optiques ou plus généralement par un moyen, sélectif en fréquence, permettant de combiner deux signaux sur deux porteuses optiques différentes. Par un exemple, un tel moyen peut prendre la forme d'un entrelaceur optique ou « wavelength interleaver » en anglais, d'un interféromètre Mach-Zehnder ou de tout dispositif équivalent apte à multiplexer plusieurs fréquences optiques.

Les signaux produits sur les différentes entrées I1,...I8 du circuit 500 selon l'invention sont modulés sur des porteuses optiques différentes. En notant $\lambda 1,... \lambda 8$, les longueurs d'ondes associées aux fréquences porteuses optiques de chacun des huit signaux d'entrée du circuit 500, il est possible d'effectuer différentes associations entre les fréquences porteuses optiques et les entrées du circuit. En prenant comme hypothèse que $\lambda 1> \lambda 2> \lambda 3> \lambda 4> \lambda 5> \lambda 6> \lambda 7> \lambda 8$, un choix possible consiste à affecter les fréquences porteuses optiques aux entrées I1,...I8 dans l'ordre croissant de leur valeur. Le tableau suivant illustre l'affectation des porteuses optiques aux différentes entrées :

| I1 | I2 | I3 | I4 | I5 | I6 | I7 | I8 |
|---|---|---|---|---|---|---|---|
| $\lambda 1$ | $\lambda 2$ | $\lambda 3$ | $\lambda 4$ | $\lambda 5$ | $\lambda 6$ | $\lambda 7$ | $\lambda 8$ |

En prenant ce choix, les signaux obtenus sur chaque sortie O1,...O8 du circuit 500 seront issus de la combinaison d'une fréquence optique basse et d'une fréquence optique élevée.

Un autre choix possible consiste à entrelacer les porteuses optiques avant de les affecter aux différentes entrées I1,...I8 du circuit 500. Le tableau suivant illustre l'affectation des porteuses optiques aux différentes entrées pour ce second choix :

| I1 | I2 | I3 | I4 | I5 | I6 | I7 | I8 |
|---|---|---|---|---|---|---|---|
| $\lambda 1$ | $\lambda 3$ | $\lambda 5$ | $\lambda 7$ | $\lambda 2$ | $\lambda 4$ | $\lambda 6$ | $\lambda 8$ |

En prenant ce second choix, les signaux obtenus sur chaque sortie O1,...O8 du circuit 500 seront issus de la combinaison de deux fréquences optiques adjacentes.

D'autres choix sont possibles sur l'ordre d'affectation des longueurs d'onde optiques aux entrées du circuit, mais les deux exemples mentionnés ci-dessus présentent l'avantage de faciliter la réalisation des multiplexeurs placés en sortie du circuit d'alimentation.

En effet on observe en suivant le chemin des signaux dans l'exemple de la figure 5 que pour le premier cas d'affectation des porteuses optiques selon un ordre croissant de leurs valeurs, chaque multiplexeur reçoit sur son entrée supérieure un signal porté par une longueur d'onde optique λ1 à λ4, et sur son entrée inférieure un signal porté par une longueur d'onde optique λ5 à λ8. Les huit multiplexeurs M1,...M8 peuvent donc être des multiplexeurs identiques de deux sous-bandes adjacentes, aussi dénommés 'diplexeurs',

Pour le second cas d'affectation des porteuses optiques selon un entrelacement préalable, les huit multiplexeurs M1,...M8 peuvent être des multiplexeurs à fonction de transfert périodique, connus sous l'appellation « wavelengths interleaver » ou entrelaceur de longueurs d'onde. Un tel dispositif peut être réalisé en tant que composant discret ou être implanté sur le même circuit optique PIC que le circuit selon l'invention.

La figure 5bis illustre le principe de fonctionnement d'un multiplexeur entrelaceur de longueurs d'onde 501. Sur la droite de la figure 5bis est représenté un diagramme du spectre en sortie des huit multiplexeurs M1,...M8. Ce spectre comporte deux jeux de porteuses optiques 510,520 entrelacées. Le premier jeu 510 correspond aux longueurs d'ondes impaires et le second jeu 520 correspond aux longueurs d'ondes paires.

Les exemples de réalisation de l'invention décrits ci-dessus à l'appui des figures 1 à 5 sont tous basés sur un circuit d'alimentation selon l'invention à deux entrées et deux sorties, dont une sortie est déphasée par rapport à l'autre sortie de +/- 90° et dont la fonction de transfert est donnée par la matrice

$$T = \frac{1}{p\sqrt{2}} \begin{pmatrix} 1 & -j \\ -j & 1 \end{pmatrix}$$

et un exemple d'implémentation est donné à la figure 1. Un tel circuit est nommé par convention coupleur 90°.

Sans sortir du cadre de l'invention, le coupleur 90° de la figure 1 peut être remplacé par tout autre dispositif réalisant la fonction d'un coupleur et dont la fonction de transfert est orthogonale ou unitaire (lorsque les combineurs utilisés sont sans perte).

Par exemple, un autre dispositif de base possible est un coupleur hybride 180° dont la fonction de transfert est donnée par la matrice $T' = \frac{1}{p\sqrt{2}} \begin{pmatrix} 1 & 1 \\ -1 & 1 \end{pmatrix}$. et qui fournit en sortie deux signaux équi-amplitude qui sont soit en phase, soit en opposition de phase (c'est-à-dire déphasés de 180°) au lieu d'un déphasage de +/- 90° comme pour le dispositif de la figure 1.

Un tel dispositif peut être réalisé de la même façon que celui présenté à la figure 1 à la différence prêt que les deux lignes à retard LR1,LR2 ont une longueur différente. La première ligne à retard LR1 a une longueur égale à la moitié de la longueur d'onde du signal à la fréquence micro-ondes. La seconde ligne à retard LR2 à une longueur nulle, autrement dit cette seconde ligne à retard peut être supprimée.

A partir de cette variante du dispositif de base selon l'invention à deux entrées et deux sorties, il est possible de construire, comme indiqué aux figures 2 à 5, des circuits d'alimentation distribuée selon l'invention ayant un nombre pair d'entrées et de sorties supérieur à deux.

Les seules modifications à apporter aux circuits décrits aux figures 2 à 5 sont les longueurs des lignes à retard qui sont configurées de sorte que la fonction de transfert du circuit d'alimentation distribuée obtenu est donnée par les matrices présentées à la figure 5ter.

La matrice $T'_4$ est la fonction de transfert théorique d'un circuit d'alimentation selon l'invention à 4 entrées et 4 sorties composé de 4 coupleurs hybrides de base dont les fonctions de transfert théorique sont égales à T'.

Le schéma d'un circuit d'alimentation distribuée de fonction de transfert théorique égale à $T'_4$ est identique au schéma de la figure 2 aux différences prêts que les quatre ensembles 201,202,203,204 sont constitués de coupleurs hybrides 180° selon la deuxième variarte de l'invention, l'une des deux lignes à retard LR5,LR6 supplémentaire est de longueur égale au quart de la longueur d'onde du signal à la fréquence micro-ondes (autrement dit à la moitié de la longueur d'une ligne à retard du coupleur hybride 180° de base) et l'autre ligne à retard LR5,LR6 supplémentaire est de longueur nulle.

On voit donc que la conception, selon l'invention, d'un circuit à 4 entrées et 4 sorties à partir d'un coupleur hybride 180° se fait de façon équivalente à celle du circuit de la figure 2 obtenus à partir d'un coupleur 90°.

De même il est également possible de concevoir un circuit d'alimentation distribuée à huit entrées et huit sorties dont la fonction de transfert théorique est la matrice $T'_8$ et qui est conçu à partir de plusieurs coupleurs hybrides 180° sur le même principe que celui décrit aux figures 4 et 5.

En observant la matrice $T'_8$, on constate que, pour chaque colonne, un gradient de phase permet de passer d'une ligne à l'autre :

$-2\pi/8, 6\pi/8, -6\pi/8, 2\pi/8, -4\pi/8, 4\pi/8, -8\pi/8, 1$

Les valeurs des déphasages obtenus en sortie du circuit 8x8 sont donc des multiples pairs de $\pi/8$ et une alternance de signe est présente entre deux sorties adjacentes.

La figure 6 représente un schéma d'un réseau de formation de faisceau d'antennes 600 comprenant un circuit d'alimentation distribuée 601 selon l'invention.

A titre illustratif, le réseau de formation de faisceau d'antennes 600 décrit à la figure 6 est adapté pour alimenter huit éléments antennaires 632,642 et comporte un circuit d'alimentation distribuée 601 selon l'invention à huit entrées et huit sorties.

Chaque entrée I1,...I8 est connectée à un modulateur optique 612,622, par exemple un modulateur Mach-Zehnder, qui reçoit sur une entrée un signal électrique ou hyperfréquences 610,620 préalablement éventuellement amplifié par le biais d'un amplificateur 611,621. La seconde entrée de chaque modulateur optique 612,622 est connectée à un générateur de porteuses optiques 602 apte à générer au moins une porteuse optique de longueur d'onde $\lambda 1$. Avantageusement, le générateur 602 est apte à générer autant de porteuses optiques que d'entrées du circuit d'alimentation distribué 601. Par exemple, le générateur 602 peut être apte à mettre en œuvre une technique de multiplexage de longueur d'onde ou « wavelength division multiplexing » en anglais afin de générer, dans l'exemple de la figure 6, huit porteuses à huit longueurs d'ondes $\lambda 1,... \lambda 8$. Chaque porteuse optique vient ainsi moduler le signal hyperfréquences produit sur une des entrées du circuit 601.

Le signal obtenu sur chacune des sorties O1,...O8 du circuit 601 est ensuite démodulé par le biais d'un détecteur optique 630,640, par exemple un photo-détecteur, apte à convertir le signal optique en signal électrique qui est ensuite éventuellement amplifié par le biais d'amplificateurs 631,641 avant d'être acheminé vers les éléments rayonnants 632,642 du réseau antennaire à alimenter.

La figure 7 illustre le diagramme de rayonnement d'antenne obtenu pour un réseau de formation de faisceau d'antennes du type de celui de la figure 6.

Sur la figure 7, deux diagrammes sont représentés, le premier, en trait plein, correspond à l'utilisation d'un coupleur de base 90° décrit à la figure 1, le second, en trait pointillé, correspond à l'utilisation d'un coupleur de base 180° tel qu'explicité dans la description ci-dessus

A coté de chaque faisceau généré, le chiffre (allant de 0 à 8) indique le coefficient multiplicateur de $\pi/8$ correspondant au déphasage entre deux sorties adjacentes du dispositif. La lettre (L ou R) donne l'orientation (gauche ou droite) du faisceau.

On voit que les deux variantes de coupleur de base selon l'invention permettent de concevoir deux réseaux de formation de faisceaux complémentaires.

La figure 8 schématise une autre variante de réalisation du circuit d'alimentation distribuée selon l'invention à quatre entrées et quatre sorties décrit précédemment à l'appui de la figure 3.

Les éléments communs des circuits décrits aux figures 3 et 8 portent les mêmes références.

Dans cette nouvelle variante, les coupleurs optiques $CP_{1,1}$, $CP_{1,2}$, $CP_{2,1}$, $CP_{2,2}$ sont remplacés par une première série d'entrelaceurs optiques $INT_{1,1}$, $INT_{1,2}$, $INT_{2,1}$, $INT_{2,2}$, et les combineurs optiques $CO_{3,1}$, $CO_{3,2}$, $CO_{4,1}$, $CO_{4,2}$ sont remplacés par une seconde série d'entrelaceurs optiques $INT_{3,1}$, $INT_{3,2}$, $INT_{4,1}$, $INT_{4,2}$. Les entrelaceurs optiques sont des composants à quatre ports, deux ports d'entrée et deux ports de sortie. Leur fonctionnement est illustré par les diagrammes 801 et 802.

Pour un ensemble de huit longueurs d'ondes optiques $\lambda_1,... \lambda_8$ régulièrement espacées, un entrelaceur optique $INT_{1,1}$ de la première série est configuré pour router une longueur d'onde sur deux vers le premier port de sortie et l'autre longueur d'onde vers le second port de sortie. Ce principe est illustré sur le diagramme 801, les longueurs d'onde $\lambda_1$, $\lambda_3$, $\lambda_5$, $\lambda_7$, représentées en pointillés sont routées vers le port de sortie opposé au port d'entrée sur lequel le signal est injecté. Au contraire les longueurs d'onde $\lambda_2$, $\lambda_4$, $\lambda_6$, $\lambda_8$, représentés en trait plein sont routées vers le port de sortie direct par rapport au port d'entrée sur lequel le signal est injecté.

Les entrelaceurs optiques de la seconde série fonctionnent sur le même principe que ceux de la première série à la différence prèt que la période d'entrelacement est double de celle de la première série. Le fonctionnement est illustré par le diagramme 802. Les quatre premières longueurs d'ondes optique $\lambda_1$, $\lambda_2$, $\lambda_3$, $\lambda_4$, sont acheminées vers le port de sortie opposé et les quatre longueurs d'ondes optiques suivantes $\lambda_5$, $\lambda_6$, $\lambda_7$, $\lambda_8$ sont acheminées vers le port de sortie direct.

L'utilisation d'entrelaceurs optiques à la place de coupleurs ou de combineurs permet d'éviter les pertes éventuelles de recombinaison des signaux en sortie.

Le fonctionnement global du circuit d'alimentation distribuée 800 selon l'invention est décrit sur la figure 8. Sur chaque entrée 11,12,13,14 du circuit 800, un signal électrique modulant deux longueurs d'onde optiques différentes est produit. L'acheminement des longueurs d'ondes optiques jusqu'aux sorties du circuit 800 est illustré sur la figure 8. Les deux premières sorties 01,02 peuvent recevoir les longueurs d'ondes $\lambda_2$, $\lambda_3$, $\lambda_6$, $\lambda_7$. Les deux dernières sorties 03,04 peuvent recevoir les longueurs d'ondes $\lambda_1$, $\lambda_4$, $\lambda_5$, $\lambda_8$.

Le circuit selon l'invention décrit à la figure 8 peut être généralisé, sans sortir du cadre de l'invention, à tout circuit à N entrées et N sorties, avec N une puissance de deux.

La figure 9 représente un schéma d'un dispositif antennaire 900 fonctionnant en réception.

Un tel dispositif 900 comporte un circuit d'alimentation distribuée 901 selon l'invention et fonctionne selon un principe similaire à celui décrit à la figure 6 à la différence que le dispositif de la figure 6 concerne un système antennaire fonctionnant en émission.

Le circuit d'alimentation distribuée 901 est identique au circuit d'alimentation distribuée 601 utilisé pour le réseau de formation de faisceaux décrit à la figure 6 à la différence prèt qu'il subit une symétrie miroir par rapport à l'agencement du circuit 601 de la figure 6. Autrement dit, ses entrées I1,...I8 et ses sorties O1,...O8 sont inversées.

En effet dans le circuit 601 utilisé pour le dispositif émetteur de la figure 6, on obtient les lois de phase linéaires sur les sorties Oi en alimentant les entrées Ij ; mais l'inverse n'est pas vrai. Pour une antenne en réception, telle que décrite à la figure 9, les lois de phase linéaires doivent se trouver du coté des éléments rayonnants, c'est-à-dire du côté des entrées Ij. Le circuit 901 obtenu par symétrie miroir à partir du circuit 601 de la figure 6 remplit cette fonction, car tous les coupleurs qui le composent sont des dispositifs réciproques. On l'alimente par les ports Ij avec des lois de phase linéaires (générées en provenance des axes des 8 faisceaux nominaux de l'antenne) et l'énergie converge respectivement vers l'une des 8 sorties. L'agencement du circuit 901 correspond à une utilisation du circuit 601 de la figure 6 en sens inverse, dans lequel les signaux se propageraient de droite à gauche.

Chaque entrée I1,...I8 est connectée à un modulateur optique 912,922, par example un modulateur Mach-Zehnder, qui reçoit sur une entrée un signal électrique ou hyperfréquences 610,620 reçu par le biais d'un élément antennaire 932,942 et préalablement éventuellement amplifié par le biais d'un amplificateur 911,921. La seconde entrée de chaque modulateur optique 912,922 est connectée à un générateur de porteuses optiques 902 apte à générer au moins une porteuse optique de longueur d'onde λ1.

Le signal obtenu sur chacune des sorties O1,...O8 du circuit 901 est ensuite démodulé par le biais d'un détecteur optique 930,940 par exemple un photo-détecteur, apte à convertir le signal optique en signal électrique qui est ensuite éventuellement amplifié par le biais d'amplificateurs 931,941.

La figure 10 schématise une variante du réseau de formation de faisceaux selon l'invention décrit à la figure 6.

Le dispositif 600* représenté à la figure 10 est identique à celui représenté à la figure 6 aux différences prêt suivantes.

Chaque modulateur optique 612,622 est alimenté non plus par des porteuses optiques continues, mais par des porteuses optiques elles mêmes modulées par une fréquence, ou pulsation, $\omega_{OL}$ d'oscillateur local micro-ondes et générées par le générateur 602. Les modulateurs optiques 612,622 jouent alors le rôle de mélangeurs optoélectroniques en recevant, sur une première entrée, un signal électrique ou hyperfréquences 610,620 à une fréquence, ou pulsation, intermédiaire $\omega_{FI}$ et sur une seconde entrée le signal optoélectronique généré par le générateur 602. Le principe de mise en œuvre d'une fonction de mélange optoélectronique par un modulateur optique est en soi connu, par exemple décrit dans la publication « G. K. Gopalakakrishnan et al., A LiNbO3 microwave-optoelectronic mixer with linear performance , IEEE MTT-S Dig, 1993, pp. 1055-1058 ».

Le dispositif 600* de la figure 10 comporte en outre, pour chaque voie de sortie, un filtre 633,643, du type filtre passe-bande, permettant d'extraire la composante fréquentielle $\omega_{RF}=\omega_{FI}+\omega_{OL}$ du signal de sortie du circuit d'alimentation 601.

La figure 11 représente un schéma d'un dispositif d'amplification multi-ports comprenant deux circuits d'alimentation distribuée selon l'invention.

Il est connu qu'un circuit d'alimentation distribuée, du type matrice de Butler, peut servir à alimenter, non pas un réseau antennaire, mais un ensemble d'amplificateurs de puissance, de sorte à moyenner la puissance instantanée qui les traverse.

Un tel dispositif 1000 d'amplification multi-ports peut être conçu en utilisant un circuit d'alimentation distribuée 1001 selon l'invention comme schématisé à la figure 11.

Le dispositif 1000 d'amplification multi-ports comporte un premier circuit d'alimentation distribuée 1001 selon l'invention comprenant huit entrées et huit sorties (étant entendu que ce nombre peut être élargi à d'autres valeurs comme déjà explicité dans la description).

Chaque entrée I1,...I8 est connectée à un modulateur optique 1012,1022, par example un modulateur Mach-Zehnder, qui reçoit sur une entrée un signal électrique ou hyperfréquences 1010,1020 préalablement éventuellement amplifié par le biais d'un amplificateur 1011,1021. La seconde entrée de chaque modulateur optique 1012,1022 est connectée à un générateur de porteuses optiques 1002 apte à générer au moins une porteuse optique de longueur d'onde λ1. Avantageusement, le générateur 1002 est apte à générer autant de porteuses optiques que d'entrées du circuit d'alimentation distribué 1001. Par exemple, le générateur 1002 peut être apte à mettre en œuvre une technique de multiplexage de longueur d'onde ou « wavelength division multiplexing » en anglais afin de générer, dans l'exemple de la figure 11, huit porteuses à huit longueurs d'ondes λ1,... À8. Chaque porteuse optique vient ainsi moduler le signal hyperfréquences produit sur une des entrées du circuit 1001.

Le signal obtenu sur chacune des sorties 01,...08 du circuit 1001 est ensuite démodulé par le biais d'un détecteur optique 1030,1040, par exemple un photo-détecteur, apte à convertir le signal optique en signal électrique qui est ensuite éventuellement amplifié par le biais d'amplificateurs 1031,1041 avant d'être acheminé vers les entrées I*1,...I*8 d'un second circuit d'alimentation distribuée 1003 dont la fonction de transfert est l'inverse $M^{-1}$ de celle, M, du premier circuit 1001.

Les lois de phase générées en sortie du premier circuit 1001 ne sont pas obligatoirement linéaires équidistantes', mais seulement orthogonales entre elles.

Le gain total en puissance théorique du dispositif 1000 d'amplification, mesuré entre une entrée S1,S8 et une sortie correspondante S'1,S'8, est égal au gain apporté par le sous-ensemble composé d'un détecteur optique 1030,1040 concaténé avec un amplificateur 1031,1041.

Ce gain est à pondérer par les pertes éventuelles survenant dans les premiers et seconds circuits 1001,1003 ainsi que celles provenant de toute imperfection de réalisation ayant pour conséquence le fait que les fonctions de transfert M et $M^{-1}$ des premier et second circuits 1001,1003 ne sont pas parfaitement inverses.

D'autres utilisations d'un circuit d'alimentation distribuée selon l'invention sont possibles. En particulier, plusieurs circuits peuvent être agencés en cascade afin de réaliser un formateur de faisceaux adapté pour alimenter un réseau antennaire à deux dimensions, par exemple un réseau planaire ou conformé.

**Revendications**

1. Circuit d'alimentation distribuée (100,200,300,400, 500) pour réseau de formation de faisceaux d'antenne comprenant une pluralité N d'entrées (I1,I2) et une pluralité N de sorties (01,02), **caractérisé en ce que** ledit circuit est adapté pour recevoir, sur au moins une entrée, un signal électrique à une fréquence micro-onde donnée, le signal étant modulé sur au moins une porteuse optique, ledit circuit comprenant au moins un ensemble (201,202,203,204) d'au moins deux diviseurs optiques (DI1,DI2) à une seule entrée et deux sorties, au moins une ligne à retard (LR1,LR2) de longueur configurée pour être égale à une fraction entière de la longueur d'onde dudit signal à sa fréquence micro-ondes et deux moyens (CO1,CO2,M1,M2) pour combiner deux signaux optiques ayant deux entrées et ayant une seule sortie connectée à une sortie distincte dudit circuit, ledit ensemble étant agencé et les lignes à retard (LR1,LR2) étant configurées de sorte que la fonction de transfert (T) théorique dudit circuit est une matrice orthogonale.

2. Circuit d'alimentation distribuée (100) selon la revendication 1 dans lequel une ligne à retard (LR1,LR2) est connectée, à une première extrémité, à une première sortie d'un diviseur optique.

3. Circuit d'alimentation distribuée (100) selon l'une quelconque des revendications précédentes dans lequel un diviseur optique (DI1,DI2) est connecté, par son entrée, à une entrée (11,12) dudit circuit.

4. Circuit d'alimentation distribuée (100) selon l'une quelconque des revendications précédentes dans lequel un moyen (CO1,CO2,M1,M2) pour combiner deux signaux optiques est connecté, par sa sortie, à une sortie (01,02) dudit circuit.

5. Circuit d'alimentation distribuée (100) selon l'une quelconque des revendications précédentes dans lequel ledit ensemble (201,202,203,204) comprend deux lignes à retard (LR1,LR2) qui sont de longueur sensiblement égale au quart de la longueur d'onde dudit signal à sa fréquence micro-ondes.

6. Circuit d'alimentation distribuée (100) selon l'une quelconque des revendications 1 à 4 dans lequel ledit ensemble (201,202,203,204) comprend une ligne à retard (LR1) de longueur sensiblement égale à la moitié de la longueur d'onde dudit signal à sa fréquence micro-ondes

7. Circuit d'alimentation distribuée (100) selon l'une quelconque des revendications précédentes dans lequel le nombre N d'entrées et de sorties est une puissance de deux.

8. Circuit d'alimentation distribuée (100) selon la revendication 7 dans lequel une seconde sortie d'un diviseur optique (DI1,DI2) est connectée à une première entrée d'un moyen (CO1,CO2,M1,M2) pour combiner deux signaux optiques et une ligne à retard (LR1,LR2) est connectée, à une seconde extrémité, à une seconde entrée d'un moyen (CO1,CO2, M1,M2) pour combiner deux signaux optiques.

9. Circuit d'alimentation distribuée (100,200,300,400, 500) selon la revendication 8 dans lequel ledit circuit comprend un nombre d'ensembles (201,202,203, 204) égal au logarithme binaire du nombre N d'entrées et de sorties que multiplie la moitié dudit nombre N.

10. Circuit d'alimentation distribuée (200) selon la revendication 9 dans lequel une sortie d'un moyen ($CO_{1,2}$, $CO_{2,1}$, $CO_{1,1}$, $CO_{2,2}$) pour combiner deux signaux optiques d'un premier ensemble (201,202) est connectée à une entrée d'un diviseur optique ($DI_{3,2}$, $DI_{4,1}$, $DI_{3,1}$, $DI_{4,2}$) d'un second ensemble (203,204), directement ou par l'intermédiaire d'une ligne à retard supplémentaire (LR5,LR6) de longueur nulle ou sensiblement égale à la moitié de la longueur d'une ligne à retard (LR1,LR2), de longueur non nulle, d'un desdits ensemble (201,202,203,204), ladite longueur étant configurée de sorte que la fonction de transfert (T) théorique dudit circuit est une matrice orthogonale.

11. Circuit d'alimentation distribuée (300) selon la revendication 10 dans lequel l'ensemble formé par un moyen ($CO_{1,2}$, $CO_{2,1}$, $CO_{1,1}$, $CO_{2,2}$) pour combiner deux signaux optiques et un diviseur optique ($DI_{3,2}$, $DI_{4,1}$, $DI_{3,1}$, $DI_{4,2}$), connectés en série, est remplacé par un coupleur optique ($CP_{1,1}$, $CP_{1,2}$, $CP_{2,1}$, $CP_{2,2}$), ladite ligne à retard supplémentaire ($LR_{5,1}$, $LR_{5,2}$, $LR_{6,1}$, $LR_{6,2}$) étant connectée, à une première extrémité, à une sortie d'un coupleur optique ($CP_{1,1}$, $CP_{1,2}$, $CP_{2,1}$, $CP_{2,2}$).

12. Circuit d'alimentation distribuée (100,200,300,400, 500) selon l'une des revendications précédentes dans lequel un moyen pour combiner deux signaux optiques est un combineur optique à 3 dB (CO1,CO2).

13. Circuit d'alimentation distribuée (100,200,300,400, 500) selon l'une des revendications 1 à 11 dans lequel un moyen pour combiner deux signaux optiques est un multiplexeur (M1,...,M8) d'au moins deux longueurs d'onde optiques et la fonction de transfert (T) théorique dudit circuit est une matrice unitaire.

14. Circuit d'alimentation distribuée (800) selon la revendication 11 dans lequel un coupleur optique ($CP_{1,1}$, $CP_{1,2}$, $CP_{2,1}$, $CP_{2,2}$) est remplacé par un premier entrelaceur de longueurs d'ondes optiques (INT$_{1,1}$, INT$_{1,2}$, INT$_{2,1}$, INT$_{2,2}$) et un moyen (INT$_{3,1}$, INT$_{3,2}$, INT$_{4,1}$, INT$_{4,2}$), relié à une sortie (01,02,03,04) dudit circuit (800), pour combiner deux signaux optiques est un second entrelaceur de longueurs d'ondes optiques (INT$_{3,1}$, INT$_{3,2}$, INT$_{4,1}$, INT$_{4,2}$), un entrelaceur de longueurs d'ondes optiques étant apte à recevoir sur une entrée une pluralité de longueurs d'ondes optiques et à les délivrer alternativement sur l'une ou l'autre de ses sorties selon une période d'entrelacement donnée, la période d'entrelacement d'un second entrelaceur étant égale au double de la période d'entrelacement d'un premier entrelaceur.

15. Circuit d'alimentation distribuée (100,200,300,400, 500,800) selon l'une quelconque des revendications précédentes dans lequel ledit circuit est un circuit intégré optique ou un circuit réalisé au moyen de fibres optiques.

16. Réseau de formation de faisceau d'antenne (600) comprenant des moyens (602,612,622) pour moduler au moins un signal électrique à une fréquence micro-ondes sur une porteuse optique, un circuit d'alimentation distribuée (601) selon l'une quelconque des revendications précédentes pour recevoir ledit au moins un signal électrique sur porteuse optique et des moyens (630,640) pour convertir ledit signal électrique sur porteuse optique en signal électrique destiné à alimenter au moins un élément antennaire (632,642) d'un réseau d'antenne.

17. Réseau de formation de faisceau d'antenne (600) selon la revendication 16 dans lequel lesdits moyens (602,612,622) pour moduler un signal électrique sur porteuse optique sont adaptés pour moduler les signaux électriques destinés à être injectés sur les entrées dudit circuit d'alimentation distribuée (601) sur des porteuses optiques de longueurs d'onde différentes.

18. Utilisation d'un circuit d'alimentation distribuée (500,601) selon l'une des revendications 1 à 13 ou d'un réseau de formation de faisceau d'antenne (600) selon l'une des revendications 16 ou 17 consistant à injecter, sur les entrées dudit circuit d'alimentation distribuée (500,601), une pluralité de signaux électriques sur porteuse optique selon un arrangement croissant des valeurs des longueurs d'onde optiques desdits signaux ou selon un arrangement alternant les valeurs paires et impaires des longueurs d'onde optiques desdits signaux.

19. Récepteur (900) comprenant une pluralité d'éléments antennaires (932,942) délivrant un signal électrique (910,920), des moyens (902,912,922) pour moduler ledit signal électrique (910,920) à une fréquence micro-ondes sur une porteuse optique, un circuit d'alimentation distribuée (901) selon l'une quelconque des revendications 1 à 15 pour recevoir ledit signal électrique sur porteuse optique et des moyens (930,940) pour convertir ledit signal électrique sur porteuse optique en signal électrique.

20. Dispositif d'amplification multi-ports (1000) comprenant des moyens (1002,1012,1022) pour moduler au moins un signal électrique à une fréquence micro-ondes sur une porteuse optique, un premier circuit d'alimentation distribuée (1001) selon l'une des revendications 1 à 15 pour recevoir ledit signal électrique sur porteuse optique, des moyens (1030,1040) pour convertir ledit signal électrique sur porteuse optique en signal électrique et un second circuit d'alimentation distribuée (1003) agencé pour recevoir le signal électrique de sortie des moyens (1030,1040) de conversion.

**Patentansprüche**

1. Verteilte Versorgungsschaltung (100, 200, 300, 400, 500) für ein Antennenstrahlformungsnetzwerk umfassend eine Mehrzahl N von Eingängen (I1, I2) und eine Mehrzahl N von Ausgängen (O1, O2), **dadurch gekennzeichnet, dass** die Schaltung zum Empfangen, an mindestens einem Eingang, eines elektrischen Signals mit einer gegebenen Mikrowellenfrequenz ausgelegt ist, wobei das Signal auf mindestens einen optischen Träger aufmoduliert ist, wobei die Schaltung mindestens einen Satz (201, 202, 203, 204) von mindestens zwei optischen Teilern (DI1, DI2) mit einem einzigen Eingang und zwei Ausgängen, mindestens eine Verzögerungsleitung (LR1, LR2) mit einer Länge, die so konfiguriert ist, dass sie gleich einem ganzzahligen Bruchteil der Wellenlänge des Signals bei seiner Mikrowellenfrequenz ist, und zwei Mittel (CO1, CO2, M1, M2) zum Kombinieren zweier optischer Signale, die zwei Eingänge und einen einzigen Ausgang haben, , der mit einem separaten Ausgang der Schaltung verbunden ist, umfasst, wobei die Anordnung so angeordnet ist und die Verzögerungsleitungen (LR1, LR2) so konfiguriert sind, dass die theoretische Übertragungsfunktion (T) der Schaltung eine orthogonale Matrix ist.

2. Verteilte Versorgungsschaltung (100) nach Anspruch 1, wobei eine Verzögerungsleitung (LR1, LR2) an einem ersten Ende mit einem ersten Ausgang eines optischen Teilers verbunden ist.

3. Verteilte Versorgungsschaltung (100) nach einem der vorherigen Ansprüche, wobei ein optischer Teiler (DI1, DI2) an seinem Eingang mit einem Eingang (I1, I2) der Schaltung verbunden ist.

4. Verteilte Versorgungsschaltung (100) nach einem der vorherigen Ansprüche, wobei ein Mittel (CO1, CO2, M1, M2) zum Kombinieren zweier optischer Signale an seinem Ausgang mit einem Ausgang (O1, O2) der Schaltung verbunden ist.

5. Verteilte Versorgungsschaltung (100) nach einem der vorherigen Ansprüche, wobei der Satz (201, 202, 203, 204) zwei Verzögerungsleitungen (LR1, LR2) mit einer Länge aufweist, die im Wesentlichen gleich einem Viertel der Wellenlänge des Signals bei seiner Mikrowellenfrequenz ist.

6. Verteilte Versorgungsschaltung (100) nach einem der Ansprüche 1 bis 4, wobei der Satz (201, 202, 203, 204) eine Verzögerungsleitung (LR1) mit einer Länge aufweist, die im Wesentlichen gleich der halben Wellenlänge des Signals bei seiner Mikrowellenfrequenz ist.

7. Verteilte Versorgungsschaltung (100) nach einem der vorherigen Ansprüche, wobei die Anzahl N der Eingänge und Ausgänge eine Potenz von zwei ist.

8. Verteilte Versorgungsschaltung (100) nach Anspruch 7, wobei ein zweiter Ausgang eines optischen Teilers (DI1, DI2) mit einem ersten Eingang eines Mittels (CO1, CO2, M1, M2) zum Kombinieren zweier optischer Signale verbunden ist und eine Verzögerungsleitung (LR1, LR2) an einem zweiten Ende mit einem zweiten Eingang eines Mittels (CO1, CO2, M1, M2) zum Kombinieren zweier optischer Signale verbunden ist.

9. Verteilte Versorgungsschaltung (100, 200, 300, 400, 500) nach Anspruch 8, wobei die Schaltung eine Anzahl von Sätzen (201, 202, 203, 204) von gleich dem binären Logarithmus der Anzahl N von Eingängen und Ausgängen multipliziert mit der Hälfte der Anzahl N umfasst.

10. Verteilte Versorgungsschaltung (200) nach Anspruch 9, wobei ein Ausgang eines Mittels ($CO_{1,2}$, $CO_{2,1}$, $CO_{1,1}$, $CO_{2,2}$) zum Kombinieren zweier optischer Signale eines ersten Satzes (201, 202) mit einem Eingang eines optischen Teilers ($DI_{3,2}$, $DI_{4,1}$, $DI_{3,1}$, $DI_{4,2}$) eines zweiten Satzes (203, 204) direkt oder über eine zusätzliche Verzögerungsleitung (LR5, LR6) mit einer Länge von Null oder im Wesentlichen gleich der Hälfte der Länge einer Verzögerungsleitung (LR1, LR2) mit einer Länge ungleich Null eines der Sätze (201, 202, 203, 204) verbunden ist, wobei die Länge so konfiguriert ist, dass die theoretische Übertragungsfunktion (T) der Schaltung eine orthogonale Matrix ist.

11. Verteilte Versorgungsschaltung (300) nach Anspruch 10, wobei der Satz, gebildet aus einem Mittel ($CO_{1,2}$, $CO_{2,1}$, $CO_{1,1}$, $CO_{2,2}$) zum Kombinieren zweier optischer Signale und einem optischen Teiler ($DI_{3,2}$, $DI_{4,1}$, $DI_{3,1}$, $DI_{4,2}$), in Reihe geschaltet, durch einen optischen Koppler ($CP_{1,1}$, $CP_{1,2}$, $CP_{2,1}$, $CP_{2,2}$) ersetzt ist, wobei die zusätzliche Verzögerungsleitung ($LR_{5,1}$, $LR_{5,2}$, $LR_{6,1}$, $LR_{6,2}$) an einem ersten Ende mit einem Ausgang eines optischen Kopplers ($CP_{1,1}$, $CP_{1,2}$, $CP_{2,1}$, $CP_{2,2}$) verbunden ist.

12. Verteilte Versorgungsschaltung (100, 200, 300, 400, 500) nach einem der vorherigen Ansprüche, wobei ein Mittel zum Kombinieren zweier optischer Signale ein optischer 3-dB-Kombinierer (CO1, CO2) ist.

13. Verteilte Versorgungsschaltung (100, 200, 300, 400, 500) nach einem der Ansprüche 1 bis 11, wobei ein Mittel zum Kombinieren zweier optischer Signale ein Multiplexer (M1,...,M8) mit mindestens zwei optischen Wellenlängen ist und die theoretische Übertragungsfunktion (T) der Schaltung eine unitäre Matrix ist.

14. Verteilte Versorgungsschaltung (800) nach Anspruch 11, wobei ein optischer Koppler ($CP_{1,1}$, $CP_{1,2}$, $CP_{2,1}$, $CP_{2,2}$) durch einen ersten Verschachteler ($INT_{1,1}$, $INT_{1,2}$, $INT_{2,1}$, $INT_{2,2}$) von optischen Wellenlängen ersetzt ist, und ein Mittel ($INT_{3,1}$, $INT_{3,2}$, $INT_{4,1}$, $INT_{4,2}$), verbunden mit einem Ausgang (O1, O2, O3, O4) der Schaltung (800), zum Kombinieren zweier optischer Signale ein zweiter Verschachteler ($INT_{3,1}$, $INT_{3,2}$, $INT_{4,1}$, $INT_{4,2}$) von optischen Wellenlängen ist, wobei ein Verschachteler von optischen Wellenlängen an einem Eingang mehrere optische Wellenlängen empfangen und sie abwechselnd an einem oder dem anderen seiner Ausgänge gemäß einer gegebenen Verschachtelungsperiode anlegen kann, wobei die Verschachtelungsperiode eines zweiten Verschachtelers gleich dem Doppelten der Verschachtelungsperiode eines ersten Verschachtelers ist.

15. Verteilte Versorgungsschaltung (100, 200, 300, 400, 500, 800) nach einem der vorherigen Ansprüche, wobei die Schaltung eine optische integrierte Schaltung oder eine mit Hilfe von optischen Fasern realisierte Schaltung ist.

16. Antennenstrahlformungsnetzwerk (600), das Mittel (602, 612, 622) zum Aufmodulieren mindestens eines elektrischen Signals mit einer Mikrowellenfrequenz auf einen optischen Träger, eine verteilte Versorgungsschaltung (601) nach einem der vorherigen Ansprüche zum Empfangen des mindestens einen elektrischen Signals auf optischem Träger und Mittel (630, 640) zum Umwandeln des elektrischen Signals auf optischem Träger in ein elektrisches Signal zum Versorgen mindestens eines Antennenelements (632, 642) einer Antennengruppe umfasst.

**17.** Antennenstrahlformungsnetzwerk (600) nach Anspruch 16, wobei die Mittel (602, 612, 622) zum Aufmodulieren eines elektrischen Signals auf optischem Träger zum Aufmodulieren der an den Eingängen der verteilten Versorgungsschaltung (601) einzuspeisenden elektrischen Signale auf optische Träger unterschiedlicher Wellenlängen ausgelegt sind.

**18.** Verwendung einer verteilten Versorgungsschaltung (500, 601) nach einem der Ansprüche 1 bis 13 oder eines Antennenstrahlformungsnetzes (600) nach Anspruch 16 oder 17, die darin besteht, an den Eingängen der verteilten Versorgungsschaltung (500, 601) mehrere elektrische Signale auf optischem Träger gemäß einer zunehmenden Anordnung der Werte der optischen Wellenlängen der Signale oder gemäß einer Anordnung mit abwechselnden geraden und ungeraden Werten der optischen Wellenlängen der Signale einzuspeisen.

**19.** Empfänger (900), der mehrere Antennenelemente (932, 942), die ein elektrisches Signal (910, 920) bereitstellen, Mittel (902, 912, 922) zum Aufmodulieren des elektrischen Signals (910, 920) mit einer Mikrowellenfrequenz auf einen optischen Träger, eine verteilte Versorgungsschaltung (901) nach einem der Ansprüche 1 bis 15 zum Empfangen des elektrischen Signals auf optischem Träger und Mittel (930, 940) zum Umwandeln des elektrischen Signals auf optischem Träger in ein elektrisches Signal umfasst.

**20.** Multiport-Verstärkungsgerät (1000), das Mittel (1002, 1012, 1022) zum Aufmodulieren mindestens eines elektrischen Signals mit einer Mikrowellenfrequenz auf einen optischen Träger, eine erste verteilte Versorgungsschaltung (1001) nach einem der Ansprüche 1 bis 15 zum Empfangen des elektrischen Signals auf optischem Träger, Mittel (1030, 1040) zum Umwandeln des elektrischen Signals auf optischem Träger in ein elektrisches Signal und eine zweite verteilte Versorgungsschaltung (1003) zum Empfangen des ausgegebenen elektrischen Signals von den Umwandlungsmitteln (1030, 1040) umfasst.

**Claims**

**1.** Distributed feeding circuit (100, 200, 300, 400, 500) for antenna beamforming array comprising a plurality N of inputs (I1, I2) and a plurality N of outputs (O1, O2), **characterized in that** said circuit is adapted for receiving, on at least one input, an electrical signal at a given microwave frequency, the signal being modulated on at least one optical carrier, the said circuit comprising at least one assembly (201, 202, 203, 204) of at least two optical dividers (DI1, DI2) with one input and two outputs, at least one delay line (LR1, LR2) of a length configured to be equal to an integer fraction of the wavelength of the said signal at its microwave frequency and two means (CO1, CO2, M1, M2) for combining two optical signals having two inputs and one single output connected to a separate output of said circuit, said assembly being arranged and the delay lines (LR1, LR2) being configured so that the theoretical transfer function (T) of the said circuit is an orthogonal matrix.

**2.** Distributed feeding circuit (100) according to Claim 1, in which a delay line (LR1, LR2) is connected, at a first end, to a first output of an optical divider.

**3.** Distributed feeding circuit (100) according to any one of the preceding claims, in which an optical divider (DI1, DI2) is connected, by its input, to an input (I1, I2) of the circuit.

**4.** Distributed feeding circuit (100) according to any one of the preceding claims, in which a means (CO1, CO2, M1, M2) for combining two optical signals is connected, by its output, to an output (01, 02) of said circuit.

**5.** Distributed feeding circuit (100) according to any one of the preceding claims, in which said assembly (201, 202, 203, 204) comprises two delay lines (LR1, LR2) which are of length substantially equal to a quarter of the wavelength of said signal at its microwave frequency.

**6.** Distributed feeding circuit (100) according to any one of the claims 1 to 4, in which said assembly (201, 202, 203, 204) comprises a delay line (LR1) of length substantially equal to half the wavelength of said signal at its microwave frequency.

**7.** Distributed feeding circuit (100) according to any one of the preceding claims, in which the number N of inputs and of outputs is a power of two.

**8.** Distributed feeding circuit (100) according to Claim 7, in which a second output of an optical divider (DI1, DI2) is connected to a first input of a means (CO1, CO2, M1, M2) for combining two optical signals and a delay line (LR1, LR2) is connected, at a second end, to a second input of a means (CO1, CO2, M1, M2) for combining two optical signals.

**9.** Distributed feeding circuit (100, 200, 300, 400, 500) according to Claim 8, in which said circuit comprises a number of assemblies (201, 202, 203, 204) which is equal to the binary logarithm of the number N of inputs and of outputs that is multiplied by half of the said number N.

**10.** Distributed feeding circuit (200) according to Claim 9, in which an output of a means ($CO_{1,2}$, $CO_{2,1}$, $CO_{1,1}$, $CO_{2,2}$) for combining two optical signals of a first assembly (201, 202) is connected to an input of an optical divider ($DI_{3,2}$, $DI_{4,1}$, $DI_{3,1}$, $DI_{4,2}$) of a second assembly (203, 204), directly or by way of an additional delay line (LR5, LR6) of length zero or substantially equal to half the length of a delay line (LR1, LR2), of non-zero length, of one of the said assemblies (201, 202, 203, 204), said length being configured so that the theoretical transfer function (T) of the said circuit is an orthogonal matrix.

11. Distributed feeding circuit (300) according to Claim 10, in which the assembly formed by a means ($CO_{1,2}$, $CO_{2,1}$, $CO_{1,1}$, $CO_{2,2}$) for combining two optical signals and an optical divider ($DI_{3,2}$, $DI_{4,1}$, $DI_{3,1}$, $DI_{4,2}$), connected in series, is replaced with an optical coupler ($CP_{1,1}$, $CP_{1,2}$, $CP_{2,1}$, $CP_{2,2}$), said additional delay line ($LR_{5,1}$, $LR_{5,2}$ $LR_{6,1}$, $LR_{6,2}$) being connected, at a first end, to an output of an optical coupler ($CP_{1,1}$, $CP_{1,2}$, $CP_{2,1}$, $CP_{2,2}$).

12. Distributed feeding circuit (100, 200, 300, 400, 500) according to any one of the preceding claims, in which a means for combining two optical signals is a 3-dB optical combiner (CO1, CO2).

13. Distributed feeding circuit (100, 200, 300, 400, 500) according to one of claims 1 to 11, in which a means for combining two optical signals is a multiplexer (M1,...,M8) of at least two optical wavelengths and the theoretical transfer function (T) of the said circuit is a unit matrix.

14. Distributed feeding circuit (800) according to Claim 11, in which an optical coupler ($CP_{1,1}$, $CP_{1,2}$, $CP_{2,1}$, $CP_{2,2}$) is replaced with a first interleaver of optical wavelengths ($INT_{1,1}$, $INT_{1,2}$, $INT_{2,1}$, $INT_{2,2}$) and a means ($INT_{3,1}$, $INT_{3,2}$, $INT_{4,1}$, $INT_{4,2}$) linked to an output (O1, O2, O3, O4) of said circuit (800), for combining two optical signals is a second interleaver of optical wavelengths ($INT_{3,1}$, $INT_{3,2}$, $INT_{4,1}$, $INT_{4,2}$), an interleaver of optical wavelengths being able to receive on an input a plurality of optical wavelengths and to deliver them alternatively on one or the other of its outputs according to a given interleaving period, the interleaving period of a second interleaver being equal to double the interleaving period of a first interleaver.

15. Distributed feeding circuit (100, 200, 300, 400, 500, 800) according to any one of the preceding claims, in which said circuit is an optical integrated circuit or a circuit embodied by means of optical fibres.

16. Antenna beamforming array (600) comprising means (602, 612, 622) for modulating at least one electrical signal at a microwave frequency on an optical carrier, a distributed feeding circuit (601) according to any one of the preceding claims, for receiving said at least one electrical signal on optical carrier and means (630, 640) for converting said electrical signal on optical carrier into an electrical signal intended to feed at least one antennal element (632, 642) of an antenna array.

17. Antenna beamforming array (600) according to Claim 16, in which said means (602, 612, 622) for modulating an electrical signal on optical carrier are adapted for modulating the electrical signals intended to be injected onto the inputs of the said distributed feeding circuit (601) on optical carriers of different wavelengths.

18. Use of a distributed feeding circuit (500, 601) according to one of claims 1 to 13, or of an antenna beamforming array (600) according to one of claim 16 or 17 consisting in injecting, onto the inputs of the said distributed feeding circuit (500, 601), a plurality of electrical signals on optical carrier according to an increasing arrangement of the values of the optical wavelengths of the said signals or according to an arrangement alternating the even and odd values of the optical wavelengths of the said signals.

19. Receiver (900) comprising a plurality of antennal elements (932, 942) delivering an electrical signal (910, 920), means (902, 912, 922) for modulating said electrical signal (910, 920) at a microwave frequency on an optical carrier, a distributed feeding circuit (901) according to one of claims 1 to 15 for receiving said electrical signal on optical carrier and means (930, 940) for converting said electrical signal on optical carrier into an electrical signal.

20. Multi-port amplification device(1000) comprising means (1002, 1012, 1022) for modulating at least one electrical signal at a microwave frequency on an optical carrier, a first distributed feeding circuit (1001) according to one of claims 1 to 15 for receiving said electrical signal on optical carrier, means (1030, 1040) for converting said electrical signal on optical carrier into an electrical signal and a second distributed feeding circuit (1003) designed to receive the electrical output signal of the conversion means (1030, 1040).

FIG.1

FIG.2

300

DI$_{1,1}$  LR$_{1,1}$  CP$_{1,1}$  LR$_{5,1}$  LR$_{3,1}$  CO$_{3,1}$

I1 — — 01

DI$_{1,2}$  CP$_{1,2}$  LR$_{5,2}$

LR$_{1,2}$  CO$_{3,2}$

I2 — — 02

— 03

LR$_{2,1}$  CP$_{2,1}$  LR$_{4,1}$

I3 — — CO$_{4,1}$

DI$_{2,1}$  LR$_{6,1}$

LR$_{2,2}$  LR$_{4,2}$  CO$_{4,2}$

I4 — — 04

DI$_{2,2}$  CP$_{2,2}$  LR$_{6,2}$

**FIG.3**

400

3d*  2d*

I1 — — 01

4d*  0

(3+4)=7d*  6d*

I2 — — 02

4d*  2d*

I3 — — 03

6d*

0  (1+4=5)d*

I4 — — 04

4d*  d*

5d*  4d*

I5 — — 05

6d*  2d*

I6 — — 06

4d*

7d*

I7 — — 07

4d*  0  6d*

I8 — 2d* — 08

3d*

**FIG.4**

$$T = \frac{1}{2p\sqrt{2}} \begin{bmatrix} 1 & e^{-j7\pi/8} & e^{-j3\pi/4} & e^{-j9\pi/8} & e^{-j\pi/2} & e^{-j9\pi/8} & e^{-j3\pi/4} & e^{-j4\pi/8} \\ e^{-j\pi/8} & 1 & e^{-j11\pi/8} & e^{-j3\pi/4} & e^{-j7\pi/8} & e^{-j\pi/2} & e^{-j13\pi/8} & e^{-j3\pi/4} \\ e^{-j\pi/4} & e^{-j9\pi/8} & 1 & e^{-j3\pi/8} & e^{-j5\pi/4} & e^{-j15\pi/8} & e^{-j\pi/2} & e^{-j5\pi/8} \\ e^{-j3\pi/8} & e^{-j\pi/4} & e^{-j5\pi/8} & 1 & e^{-j13\pi/8} & e^{-j5\pi/4} & e^{-j11\pi/8} & e^{-j2\pi/4} \\ e^{-j\pi/2} & e^{-j11\pi/8} & e^{-j5\pi/4} & e^{-j13\pi/8} & 1 & e^{-j5\pi/8} & e^{-j\pi/4} & e^{-j3\pi/8} \\ e^{-j5\pi/8} & e^{-j\pi/2} & e^{-j15\pi/8} & e^{-j5\pi/4} & e^{-j3\pi/8} & 1 & e^{-j9\pi/8} & e^{-j\pi/4} \\ e^{-j3\pi/4} & e^{-j13\pi/8} & e^{-j\pi/2} & e^{-j7\pi/8} & e^{-j3\pi/4} & e^{-j11\pi/8} & 1 & e^{-j\pi/8} \\ e^{-j7\pi/8} & e^{-j3\pi/4} & e^{-j9\pi/8} & e^{-j\pi/2} & e^{-j9\pi/8} & e^{-j3\pi/4} & e^{-j7\pi/8} & 1 \end{bmatrix}$$

FIG.4bis

500

I1 — 4d* — 0 3d* — 2d* — M₁ — 01

I2 — (3+4)=7d* — 6d* — M₂ — 02

I3 — 0 6d* — 4d* — M₃ — 03

I4 — 4d* — 0 (1+4=5)d* — 2d* — M₄ — 04

I5 — d* 0 5d* — 4d* — M₅ — 05

I6 — 0 6d* — 2d* — M₆ — 06

I7 — 7d* 4d* — M₇ — 07

I8 — 4d* — 0 0 6d* — 2d* — M₈ — 08

3d*

## FIG.5

501

I1 (λ1) —
I2 (λ2) — ⊲ — 0 (λ1, λ2)

Multiplexeur

510    520

Transmission (dB)

0
-5
-10
-15
-20
-25
-30

1541    1542    1543    1544    1545

λopt (nm)

## FIG.5bis

$$T'4 = 1/2p \begin{bmatrix} j & j & -1 & 1 \\ -1 & -1 & 1 & 1 \\ -j & j & -1 & 1 \\ 1 & 1 & 1 & 1 \end{bmatrix}$$

$$T'8 = \frac{1}{2p\sqrt{2}} \begin{bmatrix} 1 & 1 & 1 & 1 & 1 & 1 & 1 & 1 \\ e^{-j7\pi/4} & e^{-j3\pi/4} & e^{-j5\pi/4} & e^{-j\pi/4} & e^{-j6\pi/4} & e^{-j2\pi/4} & e^{-j\pi} & 1 \\ e^{-j6\pi/4} & e^{-j6\pi/4} & e^{-j2\pi/4} & e^{-j2\pi/4} & e^{-j\pi} & e^{-j\pi} & 1 & 1 \\ e^{-j5\pi/4} & e^{-j9\pi/4} & e^{-j7\pi/4} & e^{-j3\pi/4} & e^{-j10\pi/4} & e^{-j6\pi/4} & e^{-j\pi} & 1 \\ e^{-j\pi} & e^{-j\pi} & e^{-j\pi} & e^{-j\pi} & 1 & 1 & 1 & 1 \\ e^{-j3\pi/4} & e^{-j7\pi/4} & e^{-j9\pi/4} & e^{-j5\pi/4} & e^{-j6\pi/4} & e^{-j2\pi/4} & e^{-j\pi} & 1 \\ e^{-j2\pi/4} & e^{-j10\pi/4} & e^{-j6\pi/4} & e^{-j6\pi/4} & e^{-j\pi} & e^{-j\pi} & 1 & 1 \\ e^{-j\pi/4} & e^{-j13\pi/4} & e^{-j3\pi/4} & e^{-j7\pi/4} & e^{-j10\pi/4} & e^{-j6\pi/4} & e^{-j\pi} & 1 \end{bmatrix}$$

FIG.5ter

EP 2 797 167 B1

FIG.6

FIG.7

FIG.8

EP 2 797 167 B1

FIG.9

FIG.10

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2003079101 A
- FR 2929764
- US 6426721 B
- US 6337660 B
- CA 2100839

**Littérature non-brevet citée dans la description**

- **JESSE BUTLER ; RALPH LOWE.** Beam-Forming Matrix Simplifies Design of Electronically Scanned Antennas. *Electronic Design,* 12 Avril 1961, vol. 9, 170-173
- **J. T. GALLO ; R. DESALVO.** Experimental Démonstration of Optical Guided-Wave Butler Matrices. *IEEE Transactions on Microwave Theory and Techniques,* Août 1997, vol. 45 (8
- **G. K. GOPALAKAKRISHNAN et al.** A LiNbO3 microwave-optoelectronic mixer with linear performance. *IEEE MTT-S Dig,* 1993, 1055-1058